# EUROPEAN PATENT SPECIFICATION

(11) **EP 2 380 789 B1**
(45) Date of publication and mention of the grant of the patent: **21.11.2012**
(21) Application number: 11003180.4
(22) Date of filing: 15.04.2011
(51) Int. Cl.: B60S 3/06

(54) **Car-washing portal**
Autowaschanlage
Portique de lavage de voiture

(30) Priority: 23.04.2010 IT TO20100346
(43) Date of publication of application: 26.10.2011
(73) Proprietor: Sesia, Carlo, 15046 San Salvatore Monferrato (AL) (IT)
(72) Inventor: Sesia, Carlo, 15046 San Salvatore Monferrato (AL) (IT)
(74) Representative: Garavelli, Paolo

(56) References cited:
- JP-A- 8 337 157
- JP-A- 2003 025 975
- JP-A- 2004 276 750
- JP-A- 2005 231 393
- JP-A- 2007 008 204
- US-A- 6 125 860

## Description

The present invention refers to an improved car-washing portal, in particular for optimizing its use in winter time and/or when very low temperatures are present.

As known, car-washing portals are devices equipped with a plurality of brushes that, through one or more passes, take care of washing and possibly also of drying, a motor vehicle placed on a suitable washing yard. Therefore, differently from the washing tunnel in which the motor vehicle is transported through suitable racks through the different fixed washing stations in the washing portal it is the motor vehicle that remains fixed while it is the portal itself that translates over the motor vehicle.

Since washing portals are assembled outside, when there are very low temperatures, and typically during winter time, namely in the period in which a car washing system would be most necessary due to salty and muddy roads, the portals have the problem of not being able to be used or being usable only in some hot hours of the day, due to the freezing of water and other washing fluids. In order to solve such inconvenience, currently portals are subjected to frequent anti-freeze cleaning interventions: such interventions however are costly and require the use of anti-freeze substances that are often polluting and can be disposed of with difficulty.

JP-A-2007008204(which corresponds to the preamble of claim 1) discloses a car washing machine with opening and closing elements; JP-A-2003025975 discloses means for heating car washing brushes.

Therefore, object of the present invention is solving the above prior art problems by providing an improved car-washing portal that, when there are very low temperatures, prevents water and the other washing liquids from freezing, being then able to be used at any time of the day in winder.

Another object of the present invention is providing an improved car-washing portal that allows reducing or even doing without the costs due to anti-freeze cleaning interventions.

The above and other objects and advantages of the invention, as will result from the following description, are obtained with an improved car-washing portal as claimed in claim 1. Preferred embodiments and additional variations of the present invention are disclosed in the dependent claims.

It will be immediately obvious that numerous variations and modification (for example related to shape, sizes, arrangements and parts with equivalent functionality) can be made to what is described, without departing from the scope of the invention, as defined by the enclosed claims.

The present invention will be better described by some preferred embodiments thereof, provided as a non-limiting example, with reference to the enclosed drawings, in which:
- Figure 1 shows a front perspective view of a preferred embodiment of the improved car-washing portal according to the present invention;
- Figure 1b shows a rear perspective view of the improved car-washing portal of Figure 1a;
- Figure 2 shows a front perspective view of the improved car-washing portal according to the present invention in an operating phase thereof; and
- Figure 3 shows a front perspective view of the improved car-washing portal according to the present invention in another operating phase thereof.

With reference to the Figures, it is possible to note that the improved car-washing portal 1 according to the present invention comprises at least one bridge-type structure 3, of the type substantially known in the art, therefore suitable for supporting all common washing fixtures, such as for example the oscillating brushes, that rotate horizontally 5 and vertically 7, and the drying fixtures of known portals, and to contain members and devices for driving, managing, handling and supplying such fixtures, as well as the supplying and delivering ducts or water, soaps and other possible washing liquids.

The bridge-type structure 3 therefore defines, as known in the art, at least one front space 9 and at least one rear space 11 through which the passage of at least one vehicle 13 is allowed, for example a car, a van, a truck, etc., unmoving on a washing yard during the washing passes of the portal 1 on such vehicle 15.

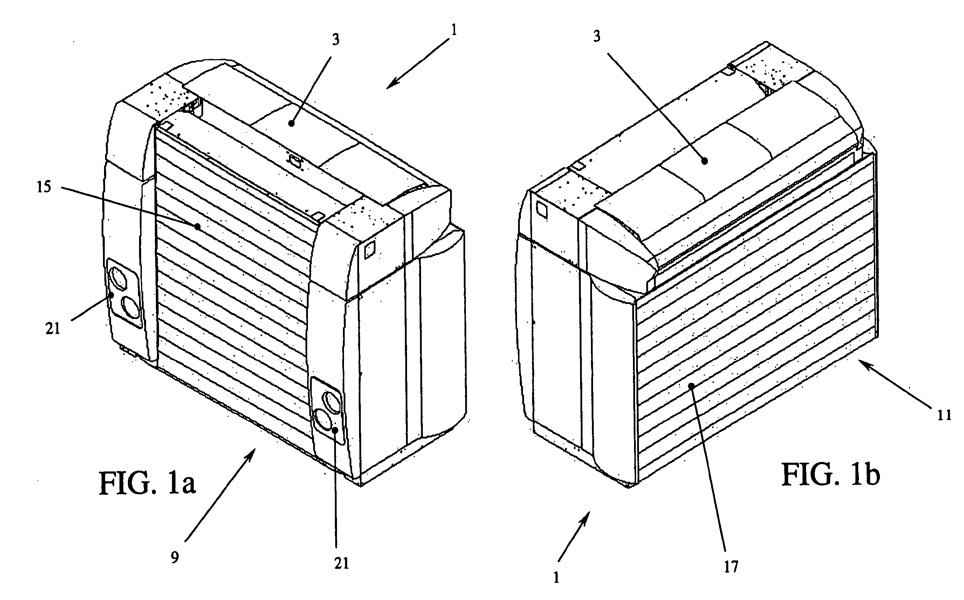

Advantageously, the improved car-washing portal 1 according to the present invention comprises at least first opening/closing means 15 of such front space 9 and at least second opening/closing means 17 of such rear space 11, so that when the portal 1 is not used, such opening/closing means 15, 17 are in a closing position of such spaces 9, 11 (as shown for example in Figures 1a and 1b) in order to create a closed environment inside the portal 1 itself and protected from external temperatures, thereby avoiding that, during winter, brushes and other internal devices of the portal 1 get frozen, making it impossible to use this latter one. Obviously, when the opening/closing means 15, 17 are instead in an opening position of such spaces 9, 11, the portal 1 according to the present invention can perform the washing operations of a possible vehicle 13 in usual and known modes.

Preferably, the first opening/closing means 15 comprise at least one first rolling gate with vertical sliding, such rolling gate being suitably wound, when it is taken in the opening position of the front space 9, in a respective first winding shaft housed inside the architrave of the bridge-type structure 3. In parallel, the second opening/closing means 17 comprise at least one second rolling gate with vertical sliding, such rolling gate being suitably wound, when taken in the opening position of the rear space 11, in un respective second winding shaft, also housed inside the architrave of the bridge-type structure 3. Obviously, the opening/closing means 15, 17 can be made through any other equivalent device to rolling gates with vertical sliding and suitable for creating the closed and protected environment inside the portal 1 according to the present invention, such as for example rolling gates with horizontal sliding, oscillating doors, curtains with fixed and sliding plastic blades, etc., without therefore departing from the scope of the present invention.

Still more preferably, the opening/closing means 15, 17, and in particular the rolling gates with vertical sliding, are with a motored operation, making therefore the opening and closing operations of the respective spaces 9, 11 automatic.

In addition, the portal 1 according to the present invention comprises at least one heating device placed inside the closed and protected environment defined by the opening/closing means 15, 17 of the spaces 9, 11, such device being adapted to heat such environment when the opening/closing means 15, 17 are closing such spaces 9, 11 in order to keep the temperature inside the portal 1, and in particular inside such environment, at an adequate value in order to avoid freezing.

In addition, the portal 1 according to the present invention comprises at least one stirring device of the washing water to avoid that water freezes inside the supply piping: preferably, such stirring device is composed of at least one closed circuit for recirculating water.

In addition, the portal 1 according to the present invention comprises a plurality of delivering nozzles for an anti-freeze liquid, such as for example salty water, arranged along the bridge-type structure 3 and possibly in a fixed position on the floor in order to avoid that ice forms in the access areas to the washing yard.

In addition, the portal 1 according to the present invention comprises at least one supplying chain contained inside at least one guide made in an environment-insulated box-shaped element so that, under a rest condition, the catenary itself and all piping inside is are protected from the cold.

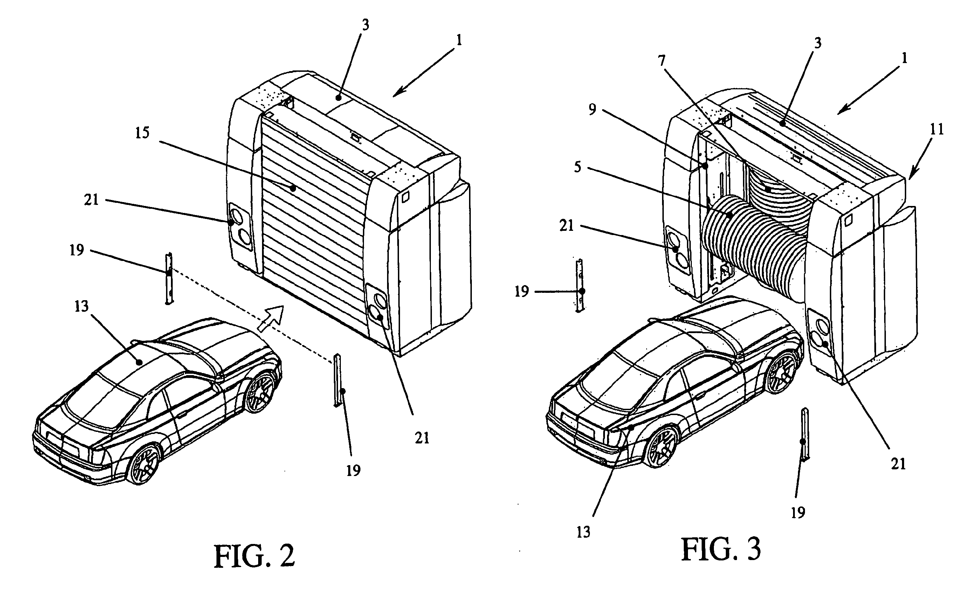

In particular, the portal 1 according to the present invention further comprises control and management means cooperating with detecting means for driving the opening and closing of the means 15, 17 and/or the possible operation of the heating device and/or of the stirring device and/or of the delivering nozzles for the anti-freeze liquid. Preferably, the detecting means comprise at least one temperature sensor or thermostat arranged inside the closed and protected environment defined by the opening/closing means 15, 17 of the spaces 9, 11: in particular, when such sensor or thermostat detects a temperature value that is lower than a preset threshold value, the control and management means drive the closure of the opening/closing means 15, 17 in order to define the protected environment inside the portal 1 and possibly the activation of the heating device and/or of the stirring device and/or of the delivering nozzles for the anti-freeze liquid. Preferably, the detecting means further comprise at least one device for detecting the presence of a vehicle 13 on the washing yard, such device being composed of detecting risers 19 of a type substantially known in the art: as can be noted as an example in Figures 2 and 3, therefore when the opening/closing means 15, 17 are closing the spaces 9, 11, if the detecting device detects the presence of the vehicle 13 on the washing yard (Figure 3), the control and management means drive the opening of the opening/closing means 15, 17 in order to allow the passage of the vehicle 13 inside the bridge-type structure 3 through the spaces 9, 11 and the usual washing operation of the portal 1 according to the present invention. At the end of washing, when the vehicle 13 is removed from the washing yard and the detecting device detects its absence, the control and management means, if the temperature sensor detects this need, again drive the closure of the opening/closing means 15, 17 in order to define the protected environment inside the portal 1 and possibly the activation of the heating device and/or of the stirring device and/or of the delivering nozzles del anti-freeze liquid.

Obviously, the portal 1 according to the present invention can further comprise suitable signaling means adapted to communicate, to a user of the portal 1, the operating conditions of the portal 1 itself: in particular, such signaling means can comprise at least one street-lamp type of device 21 with green light and red light: for example, when the portal 1 is in a standby condition with the opening/closing means 15, 17 in their closing position of the spaces 9, 11, the street-lamp device 21 can turn the green light on in order to signal that the portal 1 is available and correctly operating. When a vehicle 13 arrives in front of the portal 1 and the detecting device detects its presence, the street-lamp device 21 turns the red light on and the opening/closing means 15, 17 open the spaces 9, 11: when the opening/closing means 15, 17 are completely open, the street-lamp device 21 turns the green light on in order to signal the user that he can advance with his vehicle 13 till at least one placing device signals the correct placement of the vehicle 13 onto the washing yard with respect to the portal 1: at that time the user can set the desired washing program through a driving and activation console of a type substantially known in the art.

## Claims

1. Improved car-washing portal (1) comprising at least one bridge-type structure (3) defining at least one front space (9) and at least one rear space (11) through which a passage of at least one vehicle (13), unmoving on a washing yard, is allowed, said car-washing portal comprising at least first opening/closing means (15) of said front space (9) and at least second opening/closing means (17) of said rear space (11), wherein
said opening/closing means (15, 17) are adapted to create a closed environment inside said portal (1) and protected from external low temperatures when said opening/closing means (15, 17) are in a closing position of said spaces (9, 11); **characterized in that**
said car-washing portal further comprises:
a. at least one heating device placed inside said closed and protected environment defined by said opening/closing means (15, 17) of said spaces (9, 11), said device being adapted to heat said environment when said opening/closing means (15, 17) are closing said spaces (9, 11);
b. at least one stirring device for the washing water;
c. at least a plurality of delivering nozzles of an anti-freeze liquid arranged along said bridge-type structure (3) and/or in a fixed position on the floor; and
d. at least one supplying chain contained inside at least one guide made in an environment-insulated box-shaped element.

2. Improved car-washing portal (1) according to claim 1, **characterized in that** said first opening/closing means (15) comprise at least one first rolling gate with vertical sliding and said second opening/closing means (17) comprise at least one second rolling gate with vertical sliding.

3. Improved car-washing portal (1) according to claim 1, **characterized in that** said opening/closing means (15, 17) comprise rolling gates with horizontal sliding, oscillating doors, curtains with fixed or sliding plastic blades.

4. Improved car-washing portal (1) according to claim 1, **characterized in that** said opening/closing means (15, 17) are with a motored operation, making opening and closing operations of said spaces (9, 11) automatic.

5. Improved car-washing portal (1) according to any one of the previous claims, **characterized in that** it comprises control and management means cooperating with detecting means to drive opening and closing of said means (15, 17) and/or an operation of said heating device and/or of said stirring device and/or of said delivering nozzles of the anti-freeze liquid.

6. Improved car-washing portal (1) according to claim 5, **characterized in that** said detecting means comprise at least one temperature sensor or thermostat arranged inside said closed and protected environment and/or at least one device for detecting the presence of said vehicle (13) on said washing yard.

## Patentansprüche

1. Optimiertes Autowaschportal (1) mit mindestens einer Brückenstruktur (3), die mindestens einen vorderen Raum (9) und mindestens einen hinteren Raum (11) abgrenzt, durch die die Durchfahrt von mindestens einem Fahrzeug (13) erlaubt ist, das auf einem Waschplatz steht, das genannte Autowaschportal schließt mindestens die ersten Öffnungs-/Schließvorrichtungen (15) des genannten vorderen Raums (9) und mindestens die zweiten Öffnungs-/Schließvorrichtungen (17) des genannten hinteren Raums (11) ein, in dem die genannten Öffnungs-/Schließvorrichtungen (15, 17) dazu dienen, eine geschlossene Umgebung im genannten Portal (1) zu bilden, die vor niedrigen Außentemperaturen geschützt ist, wenn die genannten Öffnungs-/Schließvorrichtungen (15, 17) in der geschlossenen Position der genannten Räume (9, 11) sind;
und ist **dadurch gekennzeichnet, dass** das genannte Autowaschportal außerdem folgendes einschließt:
a. Mindestens eine Heizvorrichtung, die in der genannten geschlossenen Umgebung positioniert und geschützt ist, welche von den genannten Öffnungs-/Schließvorrichtungen (15, 17) der genannten Räume (9, 11) abgegrenzt wird, die genannte Vorrichtung dient dazu, die genannte Umgebung zu heizen, wenn die genannten Öffnungs-/Schließvorrichtungen (15, 17) der genannten Räume (9, 11) geschlossen werden;
b. Mindestens eine Schüttelvorrichtung des Waschwassers;
c. Mindestens mehrere Frostschutzflüssigkeitsdüsen, die längs der genannten Brückenstruktur (3) und/oder in einer festen Position am Boden angebracht sind; und
d. Mindestens eine Kettenlinie, die in mindestens einer Führung enthalten ist, welche in einem isolierten Gehäuse realisiert wurde.

2. Optimiertes Autowaschportal (1) gemäß Patentanspruch 1, das **dadurch gekennzeichnet ist, dass** die genannten ersten Öffnungs-/Schließvorrichtungen (15) mindestens eine vertikal gleitende erste Rolltür einschließen, und dass die genannten zweiten Öffnungs-/Schließvorrichtungen (17) mindestens eine vertikal gleitende zweite Rolltür einschließen.

3. Optimiertes Autowaschportal (1) gemäß Patentanspruch 1, das **dadurch gekennzeichnet ist, dass** die genannten ersten Öffnungs-/Schließvorrichtungen (15, 17) horizontal gleitende Rolltüren, Schwingtore, Jalousien mit festen oder gleitenden Plastiklamellen einschließen.

4. Optimiertes Autowaschportal (1) gemäß Patentanspruch 1, das **dadurch gekennzeichnet ist, dass** die genannten Öffnungs-/Schließvorrichtungen (15, 17) motorisiert sind, wodurch die Öffnung und Schließung der genannten Räume (9, 11) automatisch erfolgen.

5. Optimiertes Autowaschportal (1) gemäß einem beliebigen der vorhergehenden Patentansprüche, das **dadurch gekennzeichnet ist, dass** es Kontroll- und Steuervorrichtungen mit Erfassungsgeräten einschließt, um die Öffnung und Schließung der genannten Vorrichtungen (15, 17) und/oder den Betrieb der genannten Heizvorrichtung und/oder der genannten Schüttelvorrichtung und/oder der genannten Frostschutzflüssigkeitsdüsen zu steuern.

6. Optimiertes Autowaschportal (1) gemäß Patentanspruch 5, das **dadurch gekennzeichnet ist, dass** die genannten Erfassungsgeräte mindestens einen Temperatursensor oder ein Thermostat, das in der genannten geschlossenen und geschützten Umgebung enthalten ist, und/oder mindestens ein Erfassungsgerät für die Anwesenheit des genannten Fahrzeuges (13) auf dem genannten Waschplatz einschließen.

## Revendications

1. Portail de lavage autos perfectionné (1) comprenant au moins une structure en pont (3) définissant au moins un compartiment avant (9) et au moins un compartiment arrière (11) à travers lesquels est permis un passage d'au moins un véhicule (13) à l'arrêt sur une aire de lavage, ledit portail de lavage autos comprenant au moins des premiers moyens de ouverture/fermeture (15) dudit compartiment avant (9) et au moins des seconds moyens d'ouverture/fermeture (17) dudit compartiment arrière (11), dans lesdits moyens d'ouverture/fermeture (15, 17) sont aptes à créer une zone fermée à l'intérieur dudit portail (1) et protégée contre des températures externes basses quand lesdits moyens d'ouverture/fermeture (15, 17) sont dans une position de fermeture desdits compartiments (9, 11); **caractérisé par le fait que** ledit portail de lavage autos comprend en outre :
a. au moins un dispositif de chauffage positionné à l'intérieur de la zone fermée et protégée définie par lesdits moyens d'ouverture/fermeture (15, 17) desdits compartiments (9, 11), ledit dispositif étant en mesure de réchauffer ladite zone quand lesdits moyens d'ouverture/fermeture (15, 17) sont en fermeture desdits compartiments (9, 11);
b. au moins un dispositif d'agitation de l'eau de lavage;
c. au moins une pluralité de buses de distribution d'un liquide antigel disposés le long de ladite structure en pont (3) et/ou en position fixe au sol ; et
d. au moins une caténaire d'alimentation contenue à l'intérieur d'au moins un rail réalisé dans un caisson isolé.

2. Portail de lavage autos perfectionné (1) selon la revendication 1, **caractérisé par le fait que** lesdits premiers moyens d'ouverture/fermeture (15) comprennent au moins un premier rideau enrouleur à coulissement vertical et lesdits seconds moyens d'ouverture/fermeture (17) comprennent au moins un second rideau enrouleur à coulissement vertical.

3. Portail de lavage autos perfectionné (1) selon la revendication 1, **caractérisé par le fait que** lesdits moyens d'ouverture/fermeture (15, 17) comprennent des rideaux enrouleurs à coulissement horizontal, portails basculants, rideaux à lamelles plastiques fixes ou coulissantes.

4. Portail de lavage autos perfectionné (1) selon la revendication 1, **caractérisé par le fait que** lesdits moyens d'ouverture/fermeture (15, 17) ont un fonctionnement motorisé, rendant automatiques l'ouverture et la fermeture desdits compartiments (9, 11).

5. Portail de lavage autos perfectionné (1) selon une quelconque des revendications précédentes, **caractérisé par** le fait de comprendre des moyens de contrôle et de gestion coopérants avec des moyens de détection pour commander l'ouverture et la fermeture desdits moyens (15, 17) et/ou un fonctionnement dudit dispositif de chauffage et/ou dudit dispositif d'agitation et/ou desdites buses de distribution du liquide antigel.

6. Portail de lavage autos perfectionné (1) selon la revendication 5, **caractérisé par le fait que** lesdits moyens de détection comprennent au moins un capteur de température ou thermostat disposé à l'intérieur de ladite zone fermée et protégée et/ou au moins un dispositif de détection d'une présence dudit véhicule (13) sur ladite aire de lavage.
